Europäisches Patentamt

European Patent Office

Office européen des brevets

(19)

(11) Publication number: **0 037 409**
**B1**

# EUROPEAN PATENT SPECIFICATION

(45) Date of publication of patent specification: **12.09.84**

(51) Int. Cl.³: **F 16 C 1/10, B 60 T 11/06**

(21) Application number: **80901954.0**

(22) Date of filing: **20.10.80**

(86) International application number:
**PCT/GB80/00175**

(87) International publication number:
**WO 81/01179 30.04.81 Gazette 81/11**

(54) **MECHANICAL REMOTE CONTROL ASSEMBLIES.**

<table>
<tr><td>

(30) Priority: **19.10.79 GB 7936361**
**20.02.80 GB 8005648**

(43) Date of publication of application:
**14.10.81 Bulletin 81/41**

(45) Publication of the grant of the patent:
**12.09.84 Bulletin 84/37**

(84) Designated Contracting States:
**DE FR GB**

(56) References cited:
**DE-A-2 454 240**
**DE-A-2 815 743**
**FR-A-2 229 590**
**GB-A-1 409 527**

</td><td>

(73) Proprietor: **BOWDEN CONTROLS LIMITED**
**Llanelli, Dyfed**
**South Wales SA14 9TF (GB)**

(72) Inventor: **HAWTREE, George**
**88 Penyfan Road Llanelli, Dyfed**
**South Wales (GB)**

(74) Representative: **Main, Peter Stephen et al**
**HYDE, HEIDE & O'DONNELL 146 Buckingham**
**Palace Road**
**London SW1W 9TR (GB)**

</td></tr>
</table>

Courier Press, Leamington Spa, England.

## Description

This invention relates to a mechanical remote control assembly wherein there is a flexible transmission mechanism comprising a flexible conduit and a flexible inner member therein, which conduit and inner member are relatively longitudinally displaceable, and wherein there is a linking member which is connected to said conduit by a coupling device, by which linking member forces tending to cause longitudinal displacement of said conduit can be transmitted from or to another movable part.

Such a mechanical remote control assembly can be employed for simultaneously transmitting movement from an actuator, e.g. a hand lever, to two spaced independent actuatable devices, one of such devices being connected to the inner member of the said flexible mechanism and the other device being connected to said linking member.

Such assemblies are known for operating left and right-hand wheel brakes of a vehicle responsive to operation of a lever. (See DE—C—714 767, GB—A—1 464 976, DE—A—24 54 240 and DE—A—28 15 743.) In these known systems the inner member of a Bowden mechanism has one of its ends connected to the hand-lever or other actuator and its other end connected to one of the brakes. The outer member, i.e. the conduit, of such mechanism is fixed at one of its ends. Its other end is secured in the coupling device, which is linked to the second brake. When a pull load is applied to the inner member of said Bowden mechanism the resulting force on the conduit causes displacement of its end located in the coupling device. Consequently that device is displaced and the second brake is operated simultaneously with the first.

It is desirable to provide an assembly which is more versatile than the said known mechanisms in the sense that it is more easily adapted or adjustable to suit different installation requirements while maintaining high operating efficiency. The present invention aims to meet this need. The invention involves a departure from the prior art assemblies in regard to the form of coupling device employed and the manner in which it engages the conduit of the flexible mechanism.

The invention is broadly defined in claim 1 hereof.

An assembly according to the invention is characterised in that the coupling device has been constructed so that it can be secured to the conduit at various positions near to but spaced from one end of the conduit so that a corresponding end portion of the conduit projects from the coupling device and is free to be flexed and in that the coupling device is secured to the conduit at such a position by fastening means which is releasable to permit the position of said coupling device along the conduit to be adjusted at any time.

The invention affords a number of advantages.

Because the position at which the coupling device is set along the conduit of the said flexible mechanism (hereafter called "the master mechanism") is variable, the assembly is conveniently adaptable for use in machines which may differ inter se in regard to the relative spatial locations of their connecting points for the control assembly.

An important use for an assembly according to the invention is in vehicle braking systems for operating two wheel brakes by means of a common actuator. Even in a common vehicle assembly line the location of one or more anchorage points within the relevant space envelope may be subject to variation from one vehicle to the next. In known twin brake control systems, in which an adjustment means for in-service adjustment of the brakes is provided between a conduit end fitting and a fixture, the scope for adjustment of the system is sometimes inadequate to compensate for the variations in the installation conditions. By adopting the present invention the control assembly is made more easily adaptable to different installations.

By altering the position of the coupling device along the conduit of the master mechanism it is possible not only to compensate for manufacturing variations between vehicles of the same design, but also to adapt the assembly for installations in machines requiring different lay-outs of the assembly. The length of the conduit of the master mechanism is not so critical for a given installation as in assemblies in which the coupling device is constructed to enclose the extremity of the conduit.

The invention affords yet other advantages, attributable to the fact that the conduit of the master mechanism extends through the coupling device. The inner member of the master mechanism is fully supported by its guiding conduit over the full length of and beyond the coupling device. And the end portion of the master mechanism conduit which projects from the coupling device is free to flex responsive to lateral forces on the inner member of such mechanism such as occur for example if the adjacent end of that inner member is connected to a pivoted lever with the result that the connecting point between the said inner member and that lever follows an arcuate path. These features are conducive to smooth and efficient operation of the assembly.

The invention has been made primarily for vehicle braking systems and the invention includes a vehicle having a braking system incorporating a remote control assembly according to the invention.

A control assembly according to the invention can for example be installed for operating two wheel brakes by connecting one end of the inner member of the master mechanism to an actuator (which may be a hand- or foot- operated element) and the other end of such inner member to one of the brakes, and by connecting the linking member to the other brake.

However a control assembly according to the invention can be installed in other ways. For example the linking member can be connected to a hand-brake lever or other actuator and the opposite ends of the master mechanism can be connected, directly or indirectly, to different devices so that a pull load on the linking member subjects the inner member of the master mechanism to tension which causes simultaneous operation of such devices.

Assemblies according to the invention can be used in a variety of ways, as will hereafter be exemplified. By operatively associating two or more control assemblies according to the invention it becomes possible to build control systems effective for efficiently operating any number of devices simultaneously, e.g. for simultaneously operating the brakes of four vehicle wheels, even if such wheels have independent suspension.

The linking member is preferably a flexible member, for example a cable. More preferably, the linking member constitutes the inner member of a second flexible remote control mechanism comprising a conduit in which such member is longitudinally displaceable. In these circumstances the linking member can transmit loads along a nonrectilinear path without need for a sheave or other local fixed guide for imposing directional change on the linking member.

It is very suitable and it is preferred for the master mechanism, and a said second flexible mechanism comprising the linking member and a guiding conduit therefor, to be a Bowden mechanism in the normal usage of that term, i.e. a mechanism wherein the inner member is a flexible wire or cable slidable in contact with the conduit or a conduit liner. For convenience the master mechanism and the said second mechanism will hereafter be referred to as Bowden mechanisms. But it is to be understood that the master mechanism, and/or the said second mechanism if used, may be of a type comprising caged ball bearings by which the inner member is supported within the conduit. In such a mechanism the inner member can be in the form of a flexible strip. (See e.g. British Patent 1 000 550.)

The coupling device is preferably formed so that the passageway therethrough follows a curved path and so that the connecting point between the coupling device and the linking member is at a position lying to the convex side of said curved passageway and substantially in line with the axis of one end portion of such passageway. In various possible lay-out patterns of the control assembly the curvature of the passageway through the coupling device makes it possible or easier to avoid an abrupt directional change in the master mechanism at one or each end of the coupling device. The aforesaid location of the connecting point between the coupling device and the linking member ensures that the assembly can be installed so that applied and reaction forces on the coupling device do not impose a couple causing objectional tilting of the coupling device.

In one embodiment of the coupling device and the associated releasable fastening means for releasably fastening the coupling device to the conduit of the master mechanism, the coupling device is formed from a folded blank and the fastening means, e.g. a bolt or a nut and bolt combination, serves to clamp opposed portions of the blank together and thereby cause the coupling device to grip the conduit. In another embodiment a tubular plug is proviced which is insertable into one end of the passageway. By this insertion the plug becomes firmly clamped between the coupling device and the conduit and holds the latter in their selected relative positions.

In particularly advantageous embodiments of the invention the exterior surface of the flexible conduit of the master mechanism forms a male screw which is directly engaged by a female adjustment means and this adjustment means cooperates with the coupling device to hold it in a selected position on the conduit. Such adjustment means may comprise nuts for abutting against opposed ends of the coupling device. Preferably however the said adjustment means comprises a nut having a split spigot portion which is insertable into an end of the passageway in the coupling device and is thereby caused to clamp the coupling device to the conduit.

Certain embodiments of the invention, selected by way of example, will now be described with reference to the accompanying diagrammatic drawings, in which:

Fig. 1 is a general view of a hand-brake system embodying the invention;

Fig. 2 is a general view of another such system;

Fig. 3 shows in more detail a coupling device as used in the system shown in Fig. 2;

Fig. 4 shows on the left-hand side the female adjustment nut and on the right-hand side a coupling device insert component used in the system shown in Fig. 2; and

Fig. 5 is a general view of a four-wheel brake installation incorporating the invention.

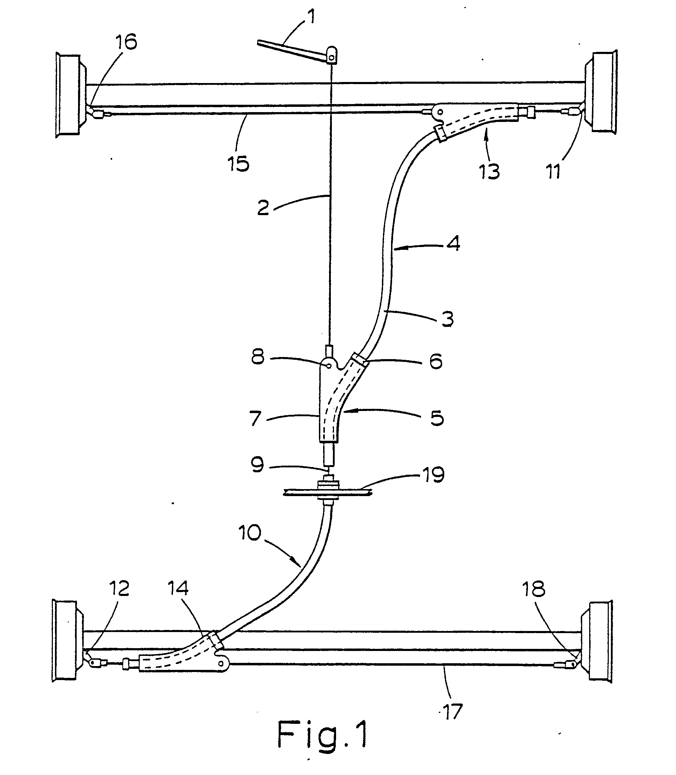

Fig. 1 represents a four-wheel braking system of a vehicle with rigid wheel axes. The system incorporates co-operating control assemblies according to the invention. A hand lever 1 is connected by a tie 2, for example a rod or a cable, to the conduit 3 of a Bowden mechanism 4. For the purpose of this connection a coupling device 5 is employed which in accordance with the invention forms a passageway through which the conduit 3 extends. The coupling device has been fastened to the conduit at a required position therealong so that the coupling device and conduit will move as a unit. This fastening is effected at the time when the control system is installed, choosing the most appropriate site for the coupling device. The length of the conduit 3 is not critical. Fastening of the coupling device to the conduit can be achieved in any manner, for example in any of the ways herein specifically described, which permits the position of the coupling device along the conduit to be easily varied at any time. In this instance the coupling device is secured in position by a clamping plug 6 which is forced into one end of the coupling device. The tie 2 is connected to a lug portion 7 of the coupling device at a point 8 which is in alignment with the axis of the remote end portion of the conduit passageway.

The inner member 9 of the Bowden mechanism 4 is common to that mechanism and a second Bowden mechanism 10. Opposed ends of that inner member 9 are connected to the brake levers 11, 12 of the front right-hand and the rear left-hand brake units.

The conduits of the Bowden mechanisms 4 and 10 pass through second and third coupling devices 13 and 14 respectively. These further coupling devices are of the same form as coupling device 5. Coupling device 13 is connected by means of a tie 15 with the brake lever 16 of the front left-hand brake unit. Coupling device 14 is connected by means of a tie 17 with the brake lever 18 of the rear right-hand brake unit.

The conduit of the Bowden mechanism 10 at its end remote from the coupling device 14 is secured to a fixture 19. This connection can be achieved for example by means of clamping nuts screwed onto a threaded metal end fitting of the conduit as known per se. The fixture 19 is the only fixed anchorage for the brake system.

When the hand-brake lever 1 is moved to apply the brakes, the coupling device 5 is pulled towards such lever, thereby imposing a tensile load on the inner member 9 of the Bowden mechanisms 4 and 10. This tensile load is directly applied to the brake levers 11 and 12. The force transmitted to the conduit 3 of Bowden mechanism 4 via the tie 2 causes the front end portion of that conduit, together with the attached coupling device 13, to be displaced towards brake lever 11 and in consequence a similar operating load is transmitted to the brake lever 16 via the tie 15. The tensile load on the inner member 9 which causes displacement of brake levers 11 and 12, also causes the rear end portion of the conduit of the Bowden mechanism 10, together with the attached coupling device 14, to be displaced towards the brake lever 12 and in consequence a similar operating load is transmitted to the brake lever 18 via the tie 17. Spring means (not shown) is present which urges the control assembly towards its brake release position. Such spring means may comprise springs located within the brake units.

The system affords a remarkably high aggregate output force. The operating force on each of the brake units approaches a value equal to the force applied to the tie 2 via the hand-brake lever 1, minus a loss factor which depends on the operating efficiencies of the Bowden mechanisms. The aggregate output force can be well in excess of three times the force applied to the tie 2. The four output forces are balanced i.e. equal to each other.

The operating efficiencies attained are in part attributable to the fact that the inner member 9 of the Bowden mechanisms is fully supported by the guiding conduits over the full lengths of the coupling devices 13 and 14. Another contributory factor is the location of the connecting points for the ties 2, 15 and 17 in alignment with the axes of the respective Bowden conduits where they emerge from the passageways in the coupling devices.

For the purpose of making in-service adjustments to the brake system, it suffices to provide a single adjustment facility. For this purpose an adjustment facility is provided directly on the flexible conduit of one of the Bowden mechanisms and use of the adjustment facility alters the position at which one of the coupling devices is secured to such conduit.

If it is required to operate only the two rear wheel brakes from the hand-lever 1, this can be done by omitting the Bowden mechanism 4, the coupling devices 5 and 13 and the tie 15, and connecting the inner member 9 of the Bowden mechanism 10 directly to the lever 1. In that case the projecting front end portion of such inner member takes the place of tie 2.

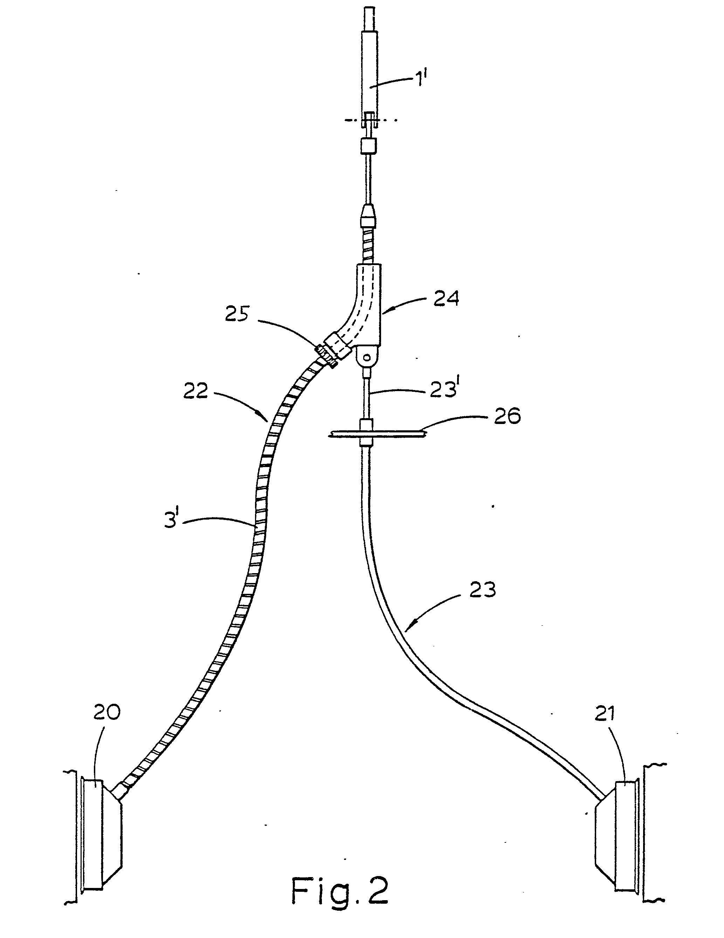

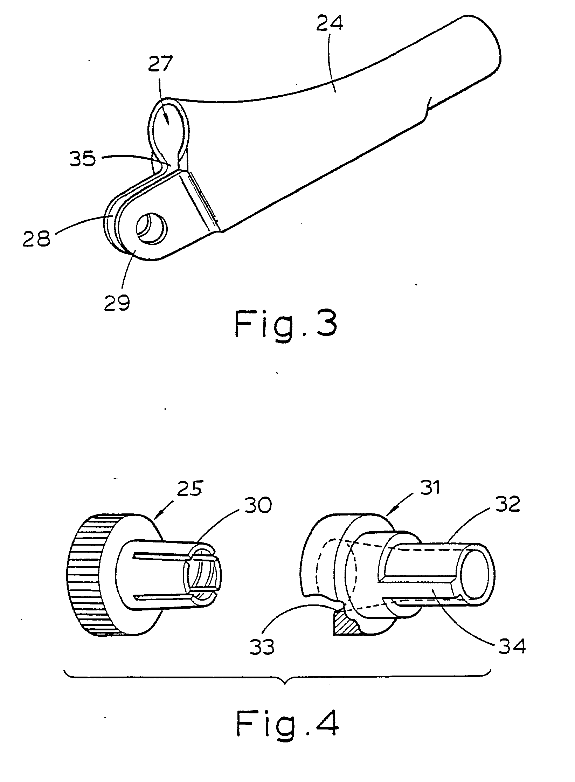

Fig. 2 shows a remote control system according to the invention installed for operating the brake units 20, 21 of opposed independently suspended vehicle wheels. The system employs two Bowden mechanisms, 22, 23 and a single coupling device 24 with which the adjuster 25 is associated as described in more detail hereafter with reference to Figs. 3 and 4.

The inner member of the Bowden mechanism 22 is connected at its front end to the hand brake lever 1 and at its rear end to an operating lever within the brake unit 20. The rear end of the conduit of that mechanism is secured to the housing of the brake unit. The inner member 23' of the Bowden mechanism 23 connects the brake lever in brake unit 21 with the coupling device 24. The conduit of that mechanism is secured at its rear end to the housing of brake unit 21 and at its front end to a fixture 26.

The conduit of the Bowden mechanism 22 comprises closely helically interwound wires which form at the exterior surface of the conduit a male screw and the adjuster 25 is in direct screw engagement with such male screw so that such adjuster can be screwed to any desired adjusted position along the conduit. The said conduit may for example have any of the forms described and shown in British Patent No. 1 409 526.

When a pull load is applied to the inner member of Bowden mechanism 22 via the lever 1 the front end portion of the conduit of that Bowden mechanism together with the coupling device 24 is displaced towards the lever 1' and brake units 20 and 21 are operated simultaneously. The operating force on each unit is equal to the force applied to the inner member of the Bowden mechanism 22 minus a loss factor depending on the efficiency of the Bowden mechanisms. The two output forces are balanced.

The fact that the conduit of the Bowden mechanism 22 projects forwardly from the coupling device 24 contributes to the smooth and efficient operation of the system because this projecting portion of the conduit is free to flex responsive to the arcuate movements of the connecting point between the inner member of such mechanism and the lever 1'.

Referring to Figs. 3 and 4: the coupling device 24 is formed from a single metal blank. The shaping of the blank and the manner of folding it are such that the folded blank defines a passageway 27 for the conduit of the master mechanism and opposed marginal portions of the blank including two lobes 28, 29 are brought into parallel relationship. Holes are formed in the lobes and they together form a two-ply lug to which the inner member 23' of the second Bowden mechanism is attached.

Fig. 4 shows the female adjustment nut 25 for screwing onto the conduit of the master mechanism. The nut has a tapered and axially slotted spigot portion 30 for clamping onto the conduit. A tubular insert component 31 is provided which has a spigot portion 32 for insertion into an end of the passageway 27 in the coupling device and which at its other end has a conical socket 33 whose angle of tape is similar to that of the tapered spigot 30 of the female adjustment member.

The spigot portion 32 of the insert component has an integral key portion 34. When the insert component is inserted into the coupling device this key portion is received by a slot 35 between opposed portions of the folded blank so that the insert component is prevented from rotating in the coupling device. Such component can be glued or clamped in place.

The position at which the adjuster 25 is set along the conduit of the master mechanism determines the effective length of this conduit. The adjuster can be located at any desired position along the conduit when setting up the system and adjustments can be easily effected at any time. After adjustment the spigot portion is pushed firmly into the insert component 31 in the end of the coupling device so that this spigot portion becomes firmly clamped onto the conduit. The spigot portion is self-locking in the conical socket 33 of the insert component because of the angle of taper and the coefficient of friction between the contacting surfaces. Consequently, when a braking force is released the coupling device and adjuster move as a unit away from the hand-brake lever. If the tapered spigot portion of the adjustment nut is pushed sufficiently firmly into the receptive socket in the insert component when setting up the system or following an adjustment, such clamping occurs automatically responsive to the first or next following application of the braking load on the system.

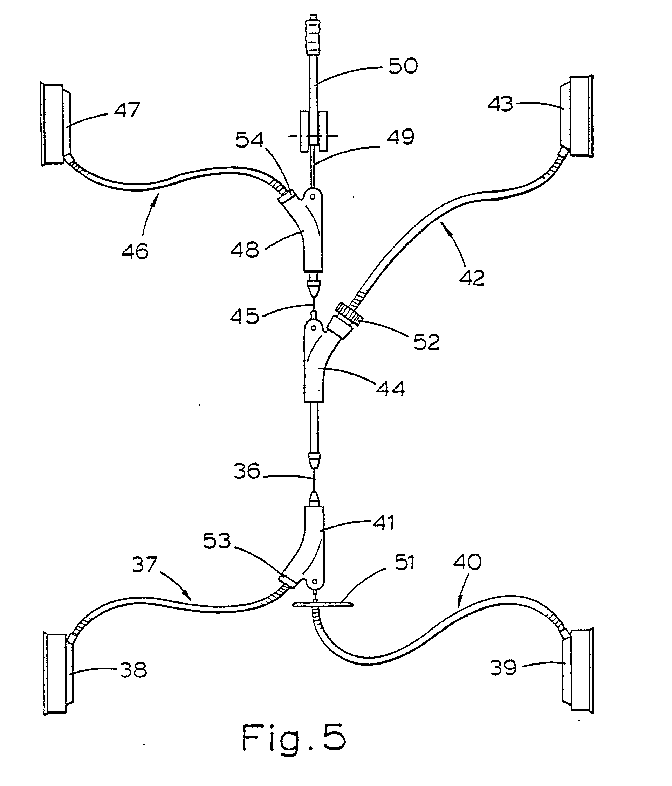

Fig. 5 shows a four-wheel braking system incorporating the invention used in a vehicle with independent suspension of all four wheels. Application of a pulling force on the inner member 36 of a first Bowden mechanism 37 connected to a wheel brake assembly 38 causes the brake of the opposed wheel brake assembly 39 to be simultaneously operated via a second Bowden mechanism 40 because the inner member of that mechanism is connected to a coupling device 41 which is connected to the conduit of the first Bowden mechanism. The inner member 36 is connected in alignment with or forms an extension of the inner member of a third Bowden mechanism 42 for operating the brake of a third wheel brake assembly 43. The conduit of that mechanism passes through the passageway in a second coupling device 44 which is in turn connected to the inner member 45 of a fourth Bowden mechanism 46 extending to a fourth brake assembly 47. The conduit of that mechanism passes through a third coupling device 48. The coupling device 48 is connected by a tie 49 with a hand-brake lever 50. When a pulling force is applied to that tie by movement of the hand-brake lever, the load is transmitted via the third coupling device 48 to the fourth Bowden mechanism 46, via that fourth Bowden mechanism and the second coupling device 44 to the third Bowden mechanism 42, and via that third Bowden mechanism to the inner member of the first and second Bowden mechanisms 37 and 40. Operation of the hand lever therefore results in simultaneous application of all four wheel-brakes. The output force, applied to each brake mechanism, is a high percentage of the input load applied to the tie 49 by the hand-brake lever. The four output forces are balanced.

It is important to note that even in such a fourwheel brake system only one abutment extraneous to the wheel brake units is required. In the illustrated arrangement the single abutment is represented at 51. And it is only necessary to provide a single adjustment facility. In the illustrated system this facility is in the form of an adjustment nut 52 which is screwed directly onto the conduit of the third Bowden mechanism 42 and is clamped onto that conduit by the coupling device 44. The coupling devices 41 and 48 are secured to their respective conduits by suitable clamping means when the system is initially set up and such clamping means do not have subsequently to be released. The clamping means may comprise clamping screws which cause the coupling devices to grip the conduits, or end clamping plugs 53, 54 which are forced onto the ends of the coupling devices.

The four-wheel braking system shown in Fig. 5 embodies the invention described and claimed in European Patent Application No. 80901953.0.

**Claims**

1. A mechanical remote control assembly wherein there is a flexible transmission mechanism (4, 22) comprising a flexible conduit (3, 3') and a flexible inner member therein, which conduit and inner member are relatively longitudinally displaceable, and wherein there is a linking member (2, 23') which is connected to said conduit (3, 3') by a coupling device (5, 24) by which linking member forces tending to cause longitudinal displacement of said conduit can be transmitted from or to another movable part (1, 1') characterised in that the coupling device (5, 24) forms a passageway (27) through which said conduit (3, 3') extends so that an end portion of the conduit projects from the coupling device and is free to be flexed; and in that the coupling device (5, 24) is secured to the conduit by fastening means (6, 25) which is releasable to permit the position at which the coupling device is set along the conduit to be adjusted at any time.

2. A control assembly according to claim 1, wherein the exterior surface of said conduit (3') of said flexible mechanism (22) forms a male screw and said releasable fastening means comprises a nut (25) which is in direct screw engagement with said conduit, said nut having a tapered spigot portion (30) which is insertable into a tapered socket (33) at one end of said coupling device (24) so as thereby to clamp said coupling device to said conduit (3').

3. A control assembly according to claim 2, wherein the coupling device (24) comprises a metal blank shaped and folded to define a passageway (27) for the conduit and also comprises an insert component (31) which is insertable into one end of such passageway and defines a tapered socket (33) for the reception of said spigot portion (30) of the adjustment member (25).

**Revendications**

1. Ensemble de télécommande mécanique comportant un mécanisme de transmission flexible (4, 22) comprenant une gaine flexible (3, 3') et un élément flexible disposé dans celle-ci, gaine et élément intérieur qui sont déplaçables longitudinalement l'un par rapport à l'autre, et un élément de liaison (2, 23') qui est relié à ladite gaine (3, 3') par un dispositif d'accouplement (5, 24) par lequel les forces d'élément de liaison tendant à provoquer un déplacement longitudinal de ladite gaine peuvent être transmises depuis ou à une autre pièce mobile (1, 1'), caractérisé en ce que le dispositif d'accouplement (5, 24) forme un passage (27) à travers lequel s'étend ladite gaine (3, 3') de sorte qu'une portion terminale de la gaine dépasse du dispositif d'accouplement et est libre d'être fléchie, et en ce que le dispositif d'accouplement (5, 24) est fixé à la gaine par un moyen de solidarisation (6, 25) qui est dégageable afin de permettre à la position en laquelle le dispositif d'accouplement est placé le long de la gaine d'être réglée à tout moment.

2. Ensemble de commande selon la revendication 1, dans lequel la surface extérieure de ladite gaine (3') dudit mécanisme flexible (22) forme une vis mâle et ledit moyen de solidarisation dégageable comprend un écrou (25) qui est en coopération de vissage direct avec ladite gaine, ledit écrou comportant une portion de canon conique (30) qui peut s'introduire dans un logement conique (33) à l'une des extrémités dudit dispositif d'accouplement (24) de façon à solidariser ainsi ledit dispositif d'accouplement à ladite gaine (3').

3. Ensemble de commande selon la revendication 2, dans lequel le dispositif d'accouplement (24) comprend un flan métallique conformé et replié de façon à définir un passage (27) pour la gaine et comprend en outre un constituant rapporté (31) qui peut s'introduire dans l'une des extrémités d'un tel passage et définit un logement conique (33) pour la réception de ladite portion de canon (30) de l'organe de réglage (25).

**Patentansprüche**

1. Mechanische Fernsteuerungsvorrichtung mit einem flexiblen Übertragungsmechanismus (4, 22), der eine flexible Führung (3, 3') und ein flexibles Innenteil umfaßt, wobei Führung und Innenteil relativ zueinander längsverschiebbar sind und mit einem Verbindungsteil (2, 23'), das an der Führung (3, 3') über eine Kupplungsvorrichtung (5, 24) angeschlossen ist, so daß von dem Verbindungsteil Kräfte, die eine Längsverschiebung der Führung hervorrufen, von oder zu einem anderen beweglichen Teil (1, 1') übertragbar sind, dadurch gekennzeichnet, daß die Kupplungsvorrichtung (5, 24) einen Durchgang (27) aufweist, durch den sich die Führung (3, 3') erstreckt, so daß ein Endabschnitt der Führung über die Kupplungsvorrichtung vorsteht und frei ist zum Biegen, und daß die Kupplungsvorrichtung (5, 24) an der Führung durch Befestigungsmittel (6, 25) befestigt ist, die lösbar sind, um die Kupplungsvorrichtung in ihre Lage entlang der Führung zu jeder Zeit ausrichten zu können.

2. Fernsteuerungsvorrichtung nach Anspruch 1, dadurch gekennzeichnet, daß die Außenoberfläche der Führung (3') des flexiblen Mechanismusses (22) ein Außengewinde bildet und daß das lösbare Befestigungsmittel eine Schraubenmutter (25) ist, die in direktem Schraubeingriff mit der Führung ist, wobei die Schraubenmutter einen konischen Muffenabschnitt (30) besitzt, der in eine konische Fassung (33) am einen Ende der Kupplungsvorrichtung (24) einsetzbar ist, wodurch die Kupplungsvorrichtung auf der Führung (3') geklemmt wird.

3. Fernsteuerungsvorrichtung nach Anspruch 2, dadurch gekennzeichnet, daß die Kupplungsvorrichtung (24) ein zur Ausbildung eines Durchgangs (27) für die Führung geformtes und gefaltetes metallisches Formstück und einen Einsatz (31) umfaßt, der in ein Ende des Durchgangs einsetzbar ist und eine konische Fassung (33) bildet für die Aufnahme des Muffenabschnitts (30) des Befestigungsmittels (25).

Fig.1

Fig.2

Fig. 3

Fig. 4

47

50

54

49

43

46

48

45

52

44

36

41

53

37

51

40

38

39

# Fig.5